# EUROPÄISCHE PATENTANMELDUNG

(11) **EP 1 332 938 A2**
(43) Veröffentlichungstag der Anmeldung: **06.08.2003**
(21) Anmeldenummer: 02026734.0
(22) Anmeldetag: 30.11.2002
(51) Int. Cl.: B60T 8/36, G05D 16/20, F16K 31/06, F15B 13/044, H01F 7/18

(54) **Elektromagnetisch betätigbare Ventileinrichtung sowie Anordnung zur Ansteuerung einer solchen Ventileinrichtung**

(30) Priorität: 05.02.2002 DE 10204553
(71) Anmelder: WABCO GmbH, 30453 Hannover (DE)
(72) Erfinder: Schappler, Hartmut, 30455 Hannover (DE); Stender, Axel, 31787 Hameln (DE)
(74) Vertreter: Günther, Constantin

(57) **Zusammenfassung**

Die Erfindung betrifft eine elektromagnetisch betätigbare Ventileinrichtung (20) zur stufenlosen oder feinstufigen Einstellung einer erwünschten Druckmittelströmung, mit einer ersten und einer zweiten Magnetspuleneinrichtung (39,43) zur Betätigung der Ventileinrichtung (20); ferner betrifft die Erfindung eine Anordnung zur Ansteuerung einer solchen Ventileinrichtung (20). Hiervon ausgehend wird eine elektromagnetisch betätigbare Ventileinrichtung (20) angegeben, mittels der eine sicherheitskritische Anlage, insbesondere eine Fahrzeugbremsanlage, bei zumindest gleicher Sicherheit weniger aufwendig gestaltet werden kann. Dies wird dadurch erreicht, daß bei der Ventileinrichtung (20) die erste und die zweite Magnetspuleneinrichtung (39,43) hinsichtlich ihres magnetischen Flusses miteinander gekoppelt sind, und daß die Anordnung zur Ansteuerung einer solchen Ventileinrichtung (20) als mehrkreisige elektrische Steuerungsanordnung mit wenigstens einem redundanten elektrischen Steuerkreis (22) für die Ventileinrichtung (20) ausgebildet ist.

## Beschreibung

Die Erfindung betrifft eine elektromagnetisch betätigbare Ventileinrichtung gemäß dem Oberbegriff des Patentanspruchs 1 sowie eine Anordnung zur Ansteuerung einer solchen Ventileinrichtung gemäß dem Patentanspruch 10.

Eine gattungsgemäße Ventileinrichtung ist aus der DE 197 17 807 A1 bekannt.

Bei der bekannten Ventileinrichtung handelt es sich um ein 4-Wege-Proportionalventil, bei dem ein Steuerschieber von einem ersten Elektromagnet in der einen Richtung und von einem auf der gegenüberliegenden Seite des Steuerschiebers angeordneten zweiten Elektromagnet in die entgegengesetzte Richtung bewegbar ist.

In sicherheitskritischen Bereichen der Technik, z. B. in Bremsanlagen für Fahrzeuge, ist es in der Regel erwünscht und erforderlich, Steuer- und Regelkreise mit einer Redundanz zu versehen. So ist es bei herkömmlichen rein druckmittelbetriebenen Bremsanlagen üblich, diese zweikreisig auszuführen, z. B. als Vorderachsund Hinterachs-Bremskreis oder als zwei diagonale Bremskreise. Bei einem Defekt in einem der Bremskreise ist eine Abbremsung des Fahrzeugs dann zumindest noch über den anderen Bremskreis möglich.

Bei neueren Bremsanlagen vom elektropneumatischen Typ ist es bekannt, die aus Sicherheitsgründen erforderliche Redundanz dadurch zu erreichen, daß ein rein pneumatischer und ein elektrisch gesteuerter Bremskreis parallel betrieben werden (EP 0 187 901 B1). Hierdurch ist die gesamte Bremsanlage relativ aufwendig, weil neben der elektrischen Steuerung noch ein wesentlicher Teil der bekannten pneumatischen Bremsanlage weiterhin notwendig ist. Zur Verringerung des Aufwands ist es jedoch wünschenswert, auf den rein pneumatisch gesteuerten Teil der Bremsanlage zu verzichten.

Es ist daher Aufgabe der Erfindung, eine elektromagnetisch betätigbare Ventileinrichtung anzugeben, mittels der eine sicherheitskritische Anlage, insbesondere eine Fahrzeugbremsanlage, bei zumindest gleicher Sicherheit weniger aufwendig gestaltet werden kann.

Diese Aufgabe wird durch die in den Patentansprüchen 1 und 10 angegebenen Ausgestaltungen der Erfindung gelöst. Vorteilhafte Weiterbildungen der Erfindung sind in den Unteransprüchen angegeben.

Die Erfindung ermöglicht in sehr eleganter Weise die Realisierung von zwei voneinander getrennten Ansteuerkreisen für einen Aktuator in einer sicherheitskritischen Anlage, z. B. einer Bremsanlage. Der Aktuator, d. h. in einer Bremsanlage ein Bremszylinder, kann dabei von einer elektromagnetisch betätigbaren Ventileinrichtung gemäß Patentanspruch 1 mit dem Bremsdruckmedium beaufschlagt werden. Die Ventileinrichtung ermöglicht infolge ihrer zwei Magnetspuleneinrichtungen die Einspeisung zweiter getrennter elektrischer Signale, die beispielsweise aus getrennten elektrischen Ansteuerkreisen gewonnen werden können. Infolge der erfindungsgemäßen Kopplung des magnetischen Flusses der Magnetspuleneinrichtungen ist ein Betrieb der Ventileinrichtung auch im Falle eines dauerhaft gestörten elektrischen Ansteuersignals einer der Magnetspuleneinrichtungen weiterhin möglich, über die andere Magnetspuleneinrichtung eine entsprechende Gegenwirkung aufzubringen und hierdurch den weiteren Betrieb der Bremsanlage zu ermöglichen. Die erfindungsgemäße Ventileinrichtung kann besonders vorteilhaft als Vorsteuerventil für ein Relaisventil in einem Anhängersteuerventil in der Bremsanlage eines Lastkraftwagens eingesetzt werden.

Gemäß einer vorteilhaften Weiterbildung der Erfindung weisen die erste und die zweite Magnetspuleneinrichtung einen gemeinsamen Anker auf, der zwecks Betätigung mechanisch auf die Ventileinrichtung einwirkt. Durch die Verwendung eines gemeinsamen Ankers kann eine Verbesserung hinsichtlich der Kopplung der magnetischen Flüsse der Magnetspuleneinrichtungen erzielt werden. Außerdem kann hierdurch ein besonders kompakter Aufbau der Ventileinrichtung realisiert werden.

Gemäß einer weiteren vorteilhaften Weiterbildung der Erfindung sind die Spulen der ersten und zweiten Magnetspuleneinrichtung auf einen gemeinsamen Wickelkern gewickelt. Hierdurch kann die Zahl der erforderlichen Bauteile, ebenso wie durch den gemeinsamen Anker, relativ gering gehalten werden.

Gemäß einer weiteren vorteilhaften Weiterbildung der Erfindung sind die Magnetspuleneinrichtungen gleichsinnig auf den Wickelkern gewickelt. Hierdurch kann eine bestmögliche Rückwirkungsfreiheit zwischen den Wicklungen erreicht werden.

Gemäß einer vorteilhaften Weiterbildung der Erfindung ist eine dritte Magnetspuleneinrichtung vorgesehen, welche mechanisch oder elektromagnetisch auf den Anker der ersten und/oder der zweiten Magnetspuleneinrichtung einwirkt. Die dritte Magnetspuleneinrichtung kann bei Verwendung der Ventileinrichtungen einer Bremsanlage vorteilhaft für eine Realisierung der Feststellbremsfunktion eingesetzt werden. Gemäß einer vorteilhaften Weiterbildung der Erfindung ist die dritte Magnetspuleneinrichtung als stromlos die Ventileinrichtung betätigender Proportionalmagnet ausgebildet. Hierdurch kann mit der Ventileinrichtung in einfacher Weise die Funktion der Feststellbremse auch bei abgestelltem Fahrzeug, d. h. bei ausgeschalteter Stromversorgungsanlage, aufrechterhalten werden. Hierfür kann die dritte Magnetspuleneinrichtung in vorteilhafter Weise alternativ auch zusammen mit dem ihr zugeordneten Anker als bistabiler Elektromagnet ausgebildet sein.

Weitere Vorteile der Erfindung, insbesondere auch der erfindungsgemäßen Anordnung zur Ansteuerung einer elektromagnetisch betätigbaren Ventileinrichtung, sind dem nachfolgend anhand von Zeichnungen erläuterten Ausführungsbeispiel zu entnehmen.

Es zeigen
- Fig. 1: die erfindungsgemäße Ventileinrichtung in einer Anwendung als Anhängersteuerventil und
- Fig. 2: eine Anordnung zur Ansteuerung der Ventileinrichtung gemäß Fig. 1 und
- Fig. 3: eine Schaltungsanordnung zur Ansteuerung der Ventileinrichtung gemäß Fig. 1 als Schaltbild.

In den Figuren werden gleiche Bezugszeichen für einander entsprechende Bauteile, Signale und sonstige Größen verwendet.

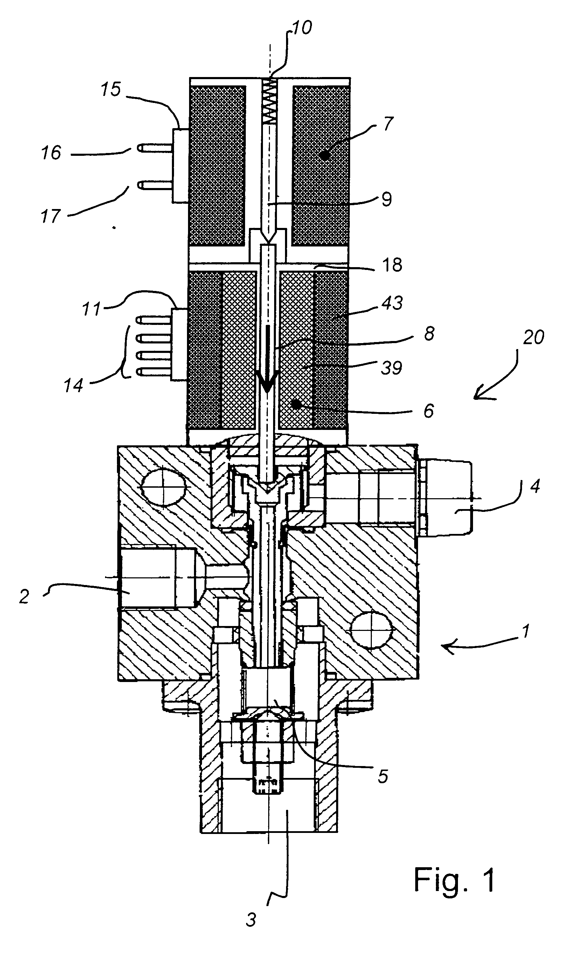

Die Fig. 1 zeigt eine Ventileinrichtung (20) mit einem Proportionalsteuerventil (1) üblicher Bauart. Das Proportionalsteuerventil (1) weist einen Druckmitteleinlaß (2), einen Druckmittelauslaß (3) sowie eine Entlüftung (4) auf. Das Proportionalsteuerventil (1) dient zur stufenlosen oder feinstufigen Einstellung einer erwünschten Druckmittelströmung bzw. eines daraus resultierenden Drucks an seinem Druckmittelausgang (3) mit einer im wesentlichen proportionalen Charakteristik. Die Ventileinrichtung (20) kann als Vorsteuerventil zur Ansteuerung eines Relaisventils (nicht dargestellt) dienen, welches einen Bremsdruck mit großer Nennweite in einer Anhängerbremsanlage steuert.

Hierfür ist das Proportionalsteuerventil (1) über einen kontinuierlich verstellbaren, längsverschiebbaren Stößel (5) mechanisch von einer Elektromagneteinrichtung (6) mittels eines auf den Stößel (5) einwirkenden Ankers (8) gegen eine Federkraft betätigbar. Die Elektromagneteinrichtung (6) weist neben dem Anker (8) eine erste Magnetspuleneinrichtung (39) und eine zweite Magnetspuleneinrichtung (43) auf. Die Spulenwindungen der Magnetspuleneinrichtungen (39, 43) sind auf einen gemeinsamen Wickelkern (18), welcher im wesentlichen konzentrisch zu dem Anker (8) angeordnet ist, aufgewikkelt. Der Wicklungssinn ist bei der ersten und der zweiten Magnetspuleneinrichtung (39, 43) vorzugsweise gleichsinnig gewählt.

Über einen elektrischen Steckkontakt (11), enthaltend die Kontaktstifte (14), sind die erste und die zweite Magnetspuleneinrichtung (39, 43) mit einem nicht dargestellten elektrischen Steckverbinder mit anderen elektrischen Einheiten verbindbar.

Über eine auf die Elektromagneteinrichtung (6) aufgesetzte weitere Elektromagneteinrichtung (7) kann eine Feststellbrems-Funktion mit der beschriebenen Ventileinrichtung (20) realisiert werden. Die weitere Elektromagneteinrichtung (7) weist einen Anker (9) auf, dessen Mittelachse im wesentlichen mit der Mittelachse des Ankers (8) fluchtet, wobei der Anker (9) auf den Anker (8) mechanisch einwirkt. Der Anker (9) ist durch eine Feder (10) in Richtung zu dem Anker (8) vorgespannt. Durch Betätigung der weiteren Elektromagneteinrichtung (7) über elektrische Signale, die über einen die Kontaktstifte (16, 17) aufweisenden elektrischen Anschluß (15) an eine Spule der weiteren Elektromagneteinrichtung (7) geführt werden können, kann der Anker (9) entgegen der Kraft der Feder (10) bewegt werden. Hierdurch wird die von der Feder (10) über den Anker (9) auf den Anker (8) ausgeübte Kraft eliminiert, so daß der Anker (8) unbeeinflußt von der weiteren Elektromagneteinrichtung (7) betätigbar ist.

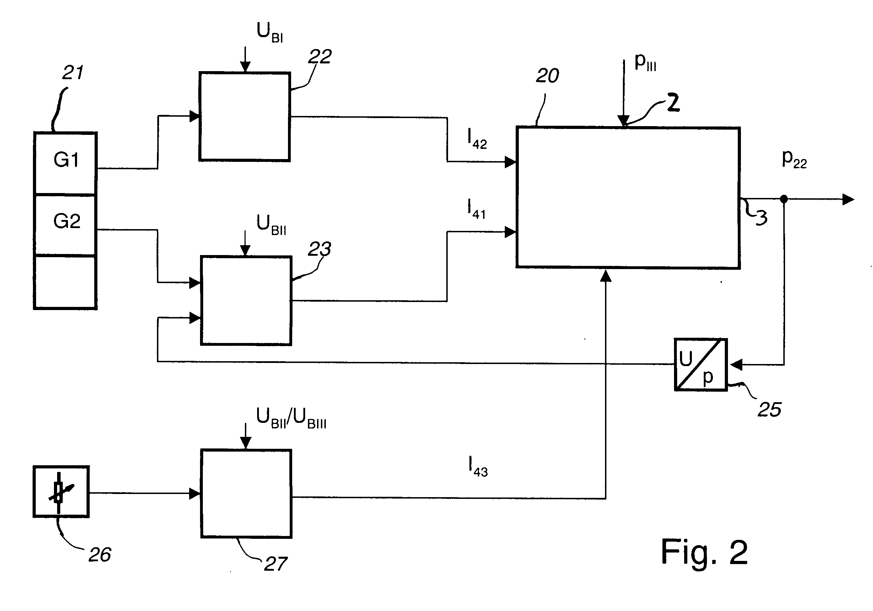

In der Fig. 2 ist eine bevorzugte Anordnung zur Ansteuerung einer Ventileinrichtung (20) gemäß Fig. 1 in einer elektrisch gesteuerten Bremsanlage schematisch dargestellt. Ein eine Bremspedalbetätigung durch den Fahrer eines Fahrzeugs erfassender Bremswertgeber (21), welcher aus Sicherheitsgründen zweikreisig redundant ausgebildet ist, gibt den erfaßten Bremswunsch des Fahrers in Form von zwei Bremswertsignalen (G1, G2) an eine erste elektronische Steuereinrichtung (22) sowie an eine zweite elektronische Steuereinrichtung (23) ab. Die Bremswertsignale (G1, G2) geben im fehlerfreien Betrieb jeweils die gleiche Information ab, d.h. eines der Bremswertsignale (G1, G2) ist als Redundanz vorgesehen. Die erste elektronische Steuereinrichtung (22) wird aus Gründen der Zweikreisigkeit von einer ersten Versorgungsspannung (U_{BI}) gespeist, die zweite elektronische Steuereinrichtung (23) wird von einer zweiten Versorgungsspannung (U_{BII}) gespeist, welche von der ersten Versorgungsspannug (U_{BI}) unabhängig ist.

Die erste elektronische Steuereinrichtung (22) gibt einen ersten Steuerstrom (I₄₂) an die Ventileinrichtung (20) ab. Die zweite elektronische Steuereinrichtung (23) gibt einen zweiten Steuerstrom (I₄₁) an die Ventileinrichtung (20) ab. Des weiteren ist ein Bremswertgeber (26) für die Feststell-Bremsfunktion vorgesehen. Dieser gibt ein Feststell-Bremswertsignal an eine dritte elektronische Steuereinrichtung (27) zur Steuerung der Feststell-Bremsfunktion ab. Die dritte elektronische Steuereinrichtung (27) kann beispielsweise von der zweiten Versorgungsspannung (U_{BII}) versorgt werden, oder auch von einer hierfür eigens vorgesehenen, unabhängigen dritten Versorgungsspannung (U_{BII}). Die dritte elektronische Steuereinrichtung (27) gibt einen dritten Steuerstrom (I₄₃) an die für die Feststell-Bremsfunktion vorgesehene weitere Elektromagneteinrichtung (7) der Ventileinrichtung (20) ab.

Die Ventileinrichtung (20) wird am Druckmitteleinlaß (2) mit einem Eingangsdruck (P_{III}) beaufschlagt. Ausgangsseitig wird am Druckmittelauslaß (3) ein Drucksignal (P₂₂) an nachgeschaltete Teile der Druckmittelanlage, insbesondere an eine Anhängerbremsanlage, abgegeben. Über einen Drucksensor (25) wird das abgegebene Drucksignal (P₂₂) in die zweite elektronische Steuereinrichtung (23) rückgekoppelt. Die zweite elektronische Steuereinrichtung (23) führt dann eine Druckregelung des abgegebenen Drucksignals (P₂₂) im Sinne eines Regelkreises mit dem Bremswertsignal (G2) als Sollwert aus.

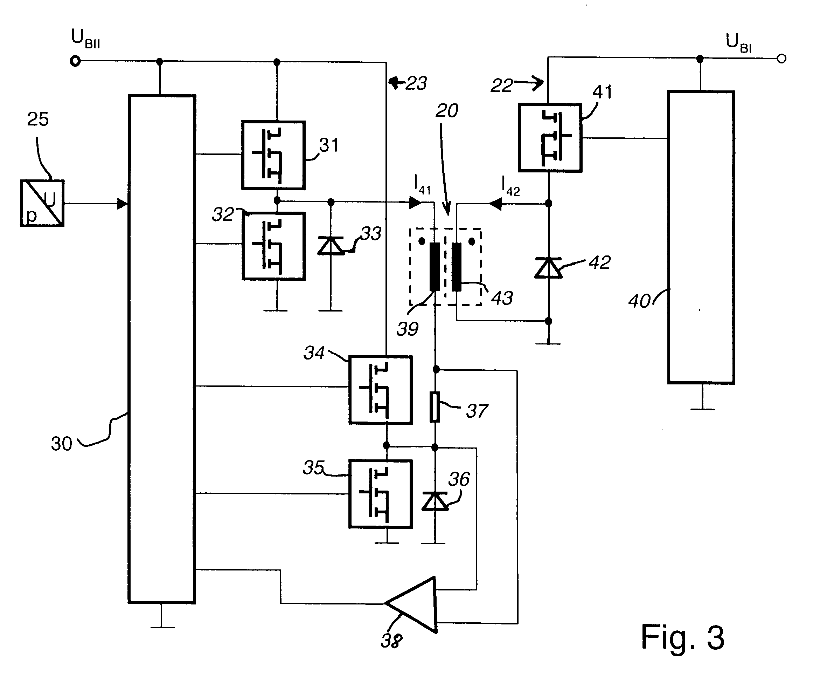

Die nähere schaltungstechnische Ausgestaltung der anhand der Fig. 2 schematisch dargestellten, für die Ansteuerung der Ventileinrichtung (20) relevanten Teile der Steuereinrichtungen (22, 23) soll nachfolgend anhand der Fig. 3 erläutert werden. Die Fig. 3 zeigt etwa im mittleren Bereich symbolisch die Ventileinrichtung (20) mit dem Schaltbild eines mitgekoppelten Transformators, jedoch zur Vereinfachung ohne die Teile für die Feststell-Bremsfunktion. Links davon sind die für die nachfolgende Erläuterung relevanten Teile der zweiten elektronischen Steuereinrichtung (23) dargestellt, rechts davon die für die nachfolgende Erläuterung relevanten Teile der ersten elektronischen Steuereinrichtung (22).

Die zweite elektronische Steuereinrichtung (23) weist einen Mikroprozessor (30) auf, an dem neben dem bereits erwähnten Drucksensor (25) noch von dem Mikroprozessor (30) betätigbare Halbleiter-Schalteinrichtungen (31, 32, 34, 35) angeschlossen sind. Die erste Magnetspuleneinrichtung (39) ist mit ihrem einen elektrischen Anschluß mit den Schalteinrichtungen (31, 32) verbunden, mit ihrem anderen elektrischen Anschluß über einen zur Stromerfassung dienenden Widerstand (37) mit den Schalteinrichtungen (34, 35) verbunden. Die Schalteinrichtungen (31, 32, 34, 35) bilden eine Vollbrückenschaltung, mit der die Magnetspuleneinrichtung (39) umpolbar mit den Potentialen der zweiten Versorgungsspannung (U_{BII}) und Masse verbindbar ist. Hierfür sind die Schalteinrichtungen (31, 34) mit der zweiten Versorgungsspannung (U_{BII}) verbunden, die Schalteinrichtungen (32, 35) mit dem Masse-Potential. Die Steueranschlüsse der Schalteinrichtungen (31, 32, 34, 35) sind mit dem Mikroprozessor (30) verbunden.

Über parallel zu der jeweiligen mit dem Masse-Potential verbundenen Schalteinrichtung (32, 35) angeordnete Freilaufdioden (33, 36) kann der Stromfluß und hiermit auch der magnetische Fluß in der Magnetspuleneinrichtung (39) bei getakteter Betätigung der Schalteinrichtungen (31, 32, 34, 35) während der Schaltpausen im wesentlichen aufrechterhalten werden. Durch entsprechend hochfrequent getaktete Betätigungen der Schalteinrichtungen (31, 32, 34, 35) ist damit eine nahezu kontinuierliche Stromeinstellung des durch die Magnetspuleneinrichtung (39) fließenden Stroms (I₄₁) in beiden Stromflußrichtungen möglich.

Mittels des zur Stromerfassung dienenden Widerstands (37) und einer nachgeschalteten Verstärkereinrichtung (38) kann der Mikroprozessor (30) zudem den durch die Magnetspuleneinrichtung (39) fließenden Strom (I₄₁) erfassen und entsprechend eine Regelung des Stroms (I₄₁) durchführen.

Die von dem Steuergerät (22) dargestellten Teile umfassen einen Mikroprozessor (40), eine Halbleiter-Schalteinrichtung (41) sowie eine Freilaufdiode (42). Die Schalteinrichtung (41) ist einerseits mit der ersten Versorgungsspannung (U_{BI}) verbunden, andererseits mit der zweiten Magnetspuleneinrichtung (43). Ein Steueranschluß der Schalteinrichtung (41) ist mit dem Mikroprozessor (40) verbunden. Über die Schalteinrichtung (41) ist die zweite Magnetspuleneinrichtung (43) infolge von Steuersignalen durch den Mikroprozessor (40) mit dem Strom (I₄₂) beaufschlagbar. Die Freilaufdiode (42) dient wiederum zur Aufrechterhaltung des Stromflusses in Schaltpausen der Schalteinrichtung (41).

## Patentansprüche

1. Elektromagnetisch betätigbare Ventileinrichtung (20) zur stufenlosen oder feinstufigen Einstellung einer erwünschten Druckmittelströmung, mit einer ersten (39) und einer zweiten (43) Magnetspuleneinrichtung zur Betätigung der Ventileinrichtung (20), **dadurch gekennzeichnet, daß** die erste (39) und die zweite (43) Magnetspuleneinrichtung hinsichtlich ihres magnetischen Flusses miteinander gekoppelt sind.

2. Ventileinrichtung nach Anspruch 1, **dadurch gekennzeichnet, daß** die erste (39) und die zweite (43) Magnetspuleneinrichtung Bestandteile einer einen gemeinsamen Anker (8) aufweisenden Elektromagneteinrichtung (6) sind, der zwecks Betätigung mechanisch auf einen Teil (1) der Ventileinrichtung (20) einwirkt.

3. Ventileinrichtung nach einem der vorhergehenden Ansprüche, **dadurch gekennzeichnet, daß** die Spulen (39, 43) der ersten und der zweiten Magnetspuleneinrichtung auf einen gemeinsamen Wickelkern (18) gewickelt sind.

4. Ventileinrichtung nach einem der vorhergehenden Ansprüche, **dadurch gekennzeichnet, daß** die Spulen (39, 43) gleichsinnig auf den Wickelkern (18) gewickelt sind.

5. Ventileinrichtung nach einem der vorhergehenden Ansprüche, **dadurch gekennzeichnet, daß** eine weitere Elektromagneteinrichtung (7) vorgesehen ist, welche mechanisch oder elektromagnetisch auf den Anker (8) der erstgenannten Elektromagneteinrichtung (6) einwirkt.

6. Ventileinrichtung nach Anspruch 5, **dadurch gekennzeichnet, daß** die weitere Elektromagneteinrichtung (7) einen eigenen Anker (9) aufweist, der mechanisch auf den Anker (8) der erstgenannten Elektromagneteinrichtung (6) einwirkt.

7. Ventileinrichtung nach Anspruch 5 oder 6, **dadurch gekennzeichnet, daß** die weitere Elektromagneteinrichtung (7) als stromlos die Ventileinrichtung (20) betätigender Proportionalmagnet ausgebildet ist.

8. Ventileinrichtung nach Anspruch 6, **dadurch gekennzeichnet, daß** die weitere Elektromagneteinrichtung (7) als bistabiler Elektromagnet ausgebildet ist.

9. Anordnung zur Ansteuerung einer elektromagnetisch betätigbaren Ventileinrichtung, insbesondere einer Ventileinrichtung (20) nach einem der vorhergehenden Ansprüche, **dadurch gekennzeichnet, daß** die Anordnung als mehrkreisige elektrische Steuerungsanordnung mit wenigstens einem als Redundanz vorgesehenen elektrischen Steuerkreis (22) für die Ventileinrichtung (20) ausgebildet ist.

10. Anordnung nach Anspruch 9, **dadurch gekennzeichnet, daß** ein weiterer elektrischer Steuerkreis (27) für eine Feststellbremsfunktion vorgesehen ist.

11. Anordnung nach Anspruch 10, **dadurch gekennzeichnet, daß** die weitere Elektromagneteinrichtung (7) von dem weiteren elektrischen Steuerkreis (27) mit Steuersignalen beaufschlagbar ist.

12. Anordnung nach einem der Ansprüche 9 bis 11, insbesondere Schaltungsanordnung, zur Ansteuerung einer Ventileinrichtung (20) mit wenigstens einer ersten (39) und einer zweiten (43) Magnetspuleneinrichtung, **dadurch gekennzeichnet, daß** wenigstens eine (39) der Magnetspuleneinrichtungen (39, 43) umpolbar ansteuerbar ist.

13. Anordnung nach einem der Ansprüche 9 bis 12, **dadurch gekennzeichnet, daß** wenigstens eine der Magnetspuleneinrichtungen (39, 43) mit einem getakteten, pulsbreitenmodulierten Spannungssignal ansteuerbar ist.
